# EUROPÄISCHE PATENTSCHRIFT

(11) **EP 0 623 442 B1**
(45) Veröffentlichungstag und Bekanntmachung des Hinweises auf die Patenterteilung: **12.06.1996**
(21) Anmeldenummer: 94106281.2
(22) Anmeldetag: 22.04.1994
(51) Int. Cl.: B29C 45/00, H02G 11/02, H01R 35/02, B60R 16/02

(54) **Verfahren zur Herstellung einer Vorrichtung zur Signalübertragung zwischen zwei Endstellen**
Process for manufacturing a device for the transmission of signals between two terminals
Procédé de fabrication d'un dispositif de transmission de signaux entre deux terminaux

(30) Priorität: 04.05.1993 DE 4314648
(43) Veröffentlichungstag der Anmeldung: 09.11.1994
(73) Patentinhaber: Kabelmetal Electro GmbH, D-30179 Hannover (DE)
(72) Erfinder: Schauer, Friedrich, Dipl.-Ing., D-90562 Heroldsberg (DE); Neuner, Andreas, D-90478 Nürnberg (DE)

(56) Entgegenhaltungen:
- EP-A- 0 282 392
- EP-A- 0 315 979
- EP-A- 0 417 350
- DE-A- 4 102 383
- FR-A- 2 316 060

## Beschreibung

Die Erfindung bezieht sich auf ein Verfahren zur Herstellung einer Vorrichtung zur Signalübertragung zwischen zwei Endstellen, von denen mindestens eine relativ zu der anderen bewegbar ist und zwischen denen eine in Windungen verlaufende, einen Wickelkörper bildende und in einer im wesentlichen kreisförmigen Kassette untergebrachte Leitung angeordnet ist, an die weiterführende Leitungen an den beiden Endstellen angeschlossen werden, bei welchem die Kassette aus zwei Teilen, einem Stator und einem um ihre Achse und den Stator drehbaren Rotor besteht (EP-OS 0 417 350).

Eine derartige Vorrichtung wird beispielsweise für die Übertragung eines Signals zum Auslösen des "Airbag" eines Prallschutzes für Kraftfahrzeuge benötigt. Sie ist zur Übertragung eines elektrischen oder optischen Signals im Lenkrad eines Kraftfahrzeugs untergebracht. "Leitung" im Sinne der Erfindung kann also eine elektrische oder eine optische Leitung sein. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der eingangs erwähnten EP-OS 0 417 350 wird für die Signalübertragung elektrischer Strom verwendet. Die Stromübertragung erfolgt durch eine beispielsweise nach Art eines Federhauses zu einem Wickelkörper gewickelte Flachband-Leitung - im folgenden kurz als "FBL" bezeichnet. Bei einer relativen Drehbewegung der beiden durch die FBL verbundenen Endstellen, "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Die FBL kann so die Drehbewegungen eines Lenkrads mitmachen, ohne daß der Signalpfad unterbrochen wird. Zur Fertigstellung der Kassette werden deren Einzelteile, insbesondere Stator und Rotor, zusammengesteckt. Dabei rasten federnde Teile und andere Rastelemente in Ausnehmungen des jeweils anderen Teils ein. Sie sichern den Zusammenhalt aller Teile der Kassette. Die federnden Teile und Rastelemente werden beim Zusammenstecken der Einzelteile der Kassette verbogen. Sie gleiten mit relativ hoher Anlagekraft auf Flächen der jeweils anderen Teile entlang. Eine Beschädigung dieser Flächen ist daher nicht zu vermeiden, insbesondere dann, wenn für den Zusammenbau Werkzeuge eingesetzt werden. Rotor und Stator sind bei dieser Kassette außerdem mit relativ großem Spiel zusammengefügt. Bei der Drehung des Rotors entstehen daher wegen der beschädigten, unrunden Flächen und des Spiels zwischen Stator und Rotor störende Geräusche.

Der Erfindung liegt die Aufgabe zugrunde, das eingangs geschilderte Verfahren so weiterzubilden, daß bei der Drehung des Rotors keine störenden Geräusche entstehen.

Diese Aufgabe wird gemäß der Erfindung dadurch gelöst, daß beide Teile der Kassette durch Spritzgießen unverlierbar so miteinander verbunden werden, daß das eine Teil im anderen um eine gemeinsame Achse drehbar ist.

Rotor und Stator der Kassette werden mit diesem Verfahren bereits bei ihrer Herstellung durch Spritzengießen zusammengefügt. Sie passen daher so genau wie irgend möglich zusammen. Die zwischen beiden Teilen bestehenden Laufflächen, die beim Drehen des Rotors wirksam werden, sind genau aufeinander abgestimmt. Beim Drehen des Rotors entstehen daher keine störenden Geräusche. Da Rotor und Stator nicht mehr zusammengesteckt werden müssen, können keine dadurch bedingten Beschädigungen irgendwelcher Flächen mehr entstehen. Das trägt zusätzlich zur Vermeidung von Geräuschen beim Drehen des Rotors bei. Es werden außerdem keine federnden Teile und Rastelemente mehr benötigt, so daß die Kassette insgesamt auch einfacher gestaltet werden kann.

Vorteilhafte Ausgestaltungen der Erfindung gehen aus den Unteransprüchen hervor.

Das Verfahren nach der Erfindung wird im folgenden anhand der Zeichnungen als Ausführungsbeispiel erläutert.

Es zeigen:
Fig. 1 eine Ansicht einer Kassette zur Signalübertragung in schematischer Darstellung.
Fig. 2 ein Einzelteil der Kassette.
Fig. 3 einen Schnitt durch Fig. 2 längs der Linie III - III.
Fig. 4 die zusammengebaute Kassette im Schnitt in vergrößerter Darstellung.

Die Erfindung wird im folgenden für eine Kassette beschrieben, in der eine Flachbandleitung (FBL) mit elektrischen Leitern angebracht ist. Statt der FBL könnte aber auch eine Leitung mit mindestens einem Lichtleiter eingesetzt werden. Auch eine kombinierte Leitung mit elektrischen und optischen Leitern könnte verwendet werden. Stellvertretend für alle anderen Möglichkeiten wird im folgenden von einer FBL mit elektrischen Leitern ausgegangen.

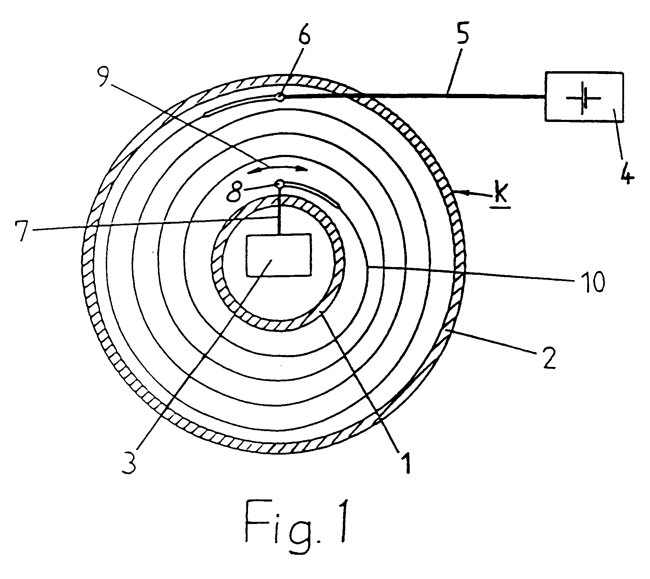

In Fig. 1 sind schematisch zwei beispielsweise kreisförmig ausgebildete Wände 1 und 2 einer Kassette K dargestellt. Sie ist für den Einbau in das Lenkrad eines Kraftfahrzeugs bestimmt. Zur Stromversorgung einer Elektronik 3, durch deren Signal ein Prallsack ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine FBL 10 mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 ist gemäß Fig. 1 in der Kassette K zwischen den beiden Endstellen 6 und 8 in mehreren Windungen angeordnet, also nach Art eines Federhauses von Uhren. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickelkörpers verkleinert bzw. vergrößert.

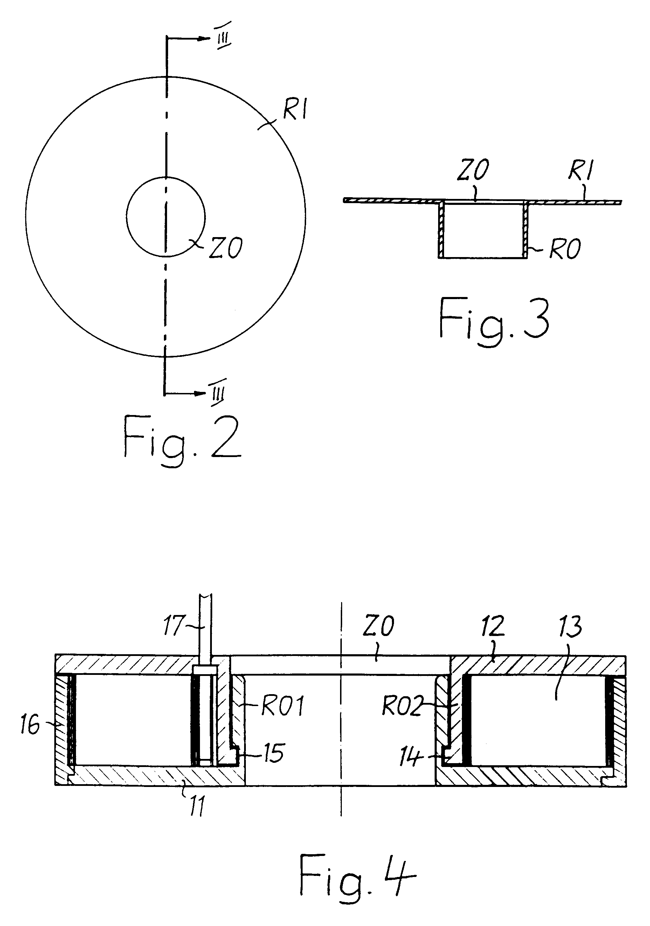

Die Kassette K besteht gemäß Fig. 4 im wesentlichen aus zwei Teilen, einem Stator 11 und einem Rotor 12. Beide Teile sind gemäß Fig. 2 und 3 als Ringscheibe RI mit einem auf einer Seite abstehenden Rohrstück RO ausgeführt. Sie schließen im zusammengebauten Zustand nach Fig. 4 einen ringförmigen Raum 13 ein, der zur Aufnahme des Wickelkörpers der FBL 10 dient. Das Rohrstück RO hat jeweils eine lichte Weite, die gleich der zentralen Öffnung ZO der Ringscheibe RI ist. Seine axiale Höhe entspricht etwa der Höhe des ringförmigen Raums 13 der Kassette K.

Beide Teile der Kassette K, Stator 11 und Rotor 12, sind somit grundsätzlich gleich aufgebaut. Sie bestehen aus Ringscheibe RI und Rohrstück RO. Die Durchmesser der Rohrstücke RO sind allerdings unterschiedlich, damit sie entsprechend Fig. 4 ineinander greifen können. Das eine Teil der Kassette K, bei dem es sich vorzugsweise um den Rotor 12 handelt, hat an an der inneren Oberfläche seines Rohrstücks RO2 einen umlaufenden Vorsprung 14, so wie er aus Fig. 4 hervorgeht. Das andere Teil der Kassette K, bei dem es sich vorzugsweise um den Stator 11 handelt, hat gemäß Fig. 4 an der äußeren Oberfläche seines Rohrstücks RO1 eine mit dem Vorsprung 14 korrespondierende Vertiefung 15. Der Vorsprung 14 greift in der fertigen Kassette K in die Vertiefung 15 ein, so daß Rotor 12 und Stator 11 miteinander verbunden sind. Der Rotor 12 ist im Stator 11 drehbar, da die beiden Rohrstücke RO1 und RO2 durch einen schmalen Luftspalt voneinander getrennt sind. Vorsprung 14 und Vertiefung 15 wirken bei der Drehung des Rotors 12 als Lagerfläche.

Es soll mindestens ein umlaufender Vorsprung 14 mit korrespondierender Vertiefung 15 an den Rohrstücken RO1 und RO2 angebracht sein. Es können aber auch zwei oder mehr Vorsprünge und Vertiefungen axial übereinander vorhanden sein. Am günstigsten ist es jedoch, wenn der Vorsprung 14 entsprechend Fig. 4 am freien Ende des Rohrstücks RO2 angebracht wird. Das Spritzgießwerkzeug zur Herstellung eines so aufgebauten Teils ist dann ohne Schieber besonders einfach gestaltet und das aus Ringscheibe RI und Rohrstück RO2 bestehende Teil kann einfach und ohne Beschädigungsgefahr entformt werden.

Der Vorsprung 14 kann prinzipiell auch am Rohrstück RO1 des Stators 11 angebracht sein. Die Vertiefung 15 befände sich dann am Rohrstück RO2 des Rotors 12. Beide Teile können aus dem gleichen Material bestehen, beispielsweise aus Polycarbonat, Polyamid oder Polyoxymethylen. Es werden vorzugsweise aber unterschiedliche Materialien eingesetzt, die insbesondere unterschiedliche Schmelzpunkte haben.

Bei der Herstellung der aus Fig. 4 ersichtlichen Kassette K wird wie folgt vorgegangen:
In einem Werkzeug einer Spritzgießvorrichtung wird zunächst das erste Teil der Kassette K - hier der Rotor 12 - durch Spritzen hergestellt. Sobald das Material des Rotors 12 ausreichend fest ist, wird derselbe in ein zweites Werkzeug eingebracht, in welchem das zweite Teil der Kassette K - hier also der Stator 11 - um den Rotor 12 herumgespritz wird. Das Rohrstück RO1 des Stators 11 liegt dann innerhalb des Rohrstücks RO2 des Rotors 12. Es umschließt mit seiner umlaufenden Vertiefung 15 den Vorsprung 14 des Rohrstücks RO2. Nach dem Abkühlen der gespritzten Materialien sind die Rohrstücke RO1 und RO2 durch einen schmalen Luftspalt voneinander getrennt. Der Rotor 12 ist dann leicht und geräuscharm im Stator 11 drehbar.

Zur Einstellung des Luftspalts zwischen den Rohrstücken RO1 und RO2 wird der Schwund der gespritzten Materialien beim Abkühlen ausgenutzt. Zweckmäßig werden für Rotor 12 und Stator 11 - wie schon erwähnt - unterschiedliche Materialien verwendet. Das Material des später gespritzten Stators 11 hat vorzugsweise einen niedrigeren Schmelzpunkt als das Material des Rotors 12.

Zum Spritzen von Rotor 12 und Stator 11 kann die gleiche Spritzgießvorrichtung verwendet werden. Sie hat zwei unterschiedliche Werkzeuge. Das Werkzeug für den Rotor 12 kann in das Werkzeug für den Stator 11 hineingedreht werden. Die aus Stator 11 und Rotor 12 bestehende Kassette K wird dann also in einem Arbeitsgang hergestellt.

Nach Entformung des aus Rotor 12 und Stator 11 bestehenden Bauteils kann der Wickelkörper der FBL 10 in den ringförmigen Raum 13 der Kassette K eingebracht werden. Die Kassette K kann dann mit einer Abdeckung 16 verschlossen werden. Am einen Ende der FBL 10 ragt eine weiterführende Leitung 17 aus der Kassette K heraus. Die andere, am anderen Ende der FBL 10 angebrachte weiterführende Leitung ist in Fig. 4 nicht mit eingezeichnet.

## Patentansprüche

1. Verfahren zur Herstellung einer Vorrichtung zur Signalübertragung zwischen zwei Endstellen, von denen mindestens eine relativ zu der anderen bewegbar ist und zwischen denen eine in Windungen verlaufende, einen Wickelkörper bildende und in einer im wesentlichen kreisförmigen Kassette untergebrachte Leitung angeordnet ist, an die weiterführende Leitungen an den beiden Endstellen angeschlossen werden, bei welchem die Kassette aus zwei Teilen, einem Stator und einem um ihre Achse und den Stator drehbaren Rotor besteht, dadurch gekennzeichnet, daß beide Teile der Kassette (K) durch Spritzgießen unverlierbar so miteinander verbunden werden, daß das eine Teil im anderen um eine gemeinsame Achse drehbar ist.

2. Verfahren nach Anspruch 1, dadurch gekennzeichnet, daß beide Teile der Kassette (K) als Ringscheibe (RI) mit einem auf einer Seite abstehenden zylindrischen Rohrstück (RO), dessen lichte Weite gleich der lichten Weite der zentralen Öffnung der Ringscheibe (RI) ist und dessen axiale Höhe etwa der Höhe der Kassette (K) entspricht, durch Spritzengießen hergestellt werden.

3. Verfahren nach Anspruch 1 oder 2, dadurch gekennzeichnet,
- daß zunächst das erste Teil (12) der Kassette (K) mit mindestens einem umlaufenden Vorsprung (14) an der inneren Oberfläche seines Rohrstücks (RO2) hergestellt wird,
- daß danach das zweite Teil (11) der Kassette (K) um das erste Teil (12) derart herumgespritzt wird, daß sein Rohrstück (RO1) durch einen schmalen Luftspalt vom Rohrstück (RO2) des ersten Teils (12) getrennt innerhalb desselben liegt und dessen Vorsprung (14) mit einer umlaufenden Vertiefung (15) umgreift und
- daß abschließend der Wickelkörper der Leitung (10) in den ringförmigen Raum (13) zwischen den beiden Teilen (11,12) der Kassette (K) eingebracht wird.

4. Verfahren nach einem der Ansprüche 1 bis 3, dadurch gekennzeichnet, daß beide Teile (11,12) der Kassette (K) in schwenkbaren Werkzeugen der gleichen Spritzgießvorrichtung in einem Arbeitsgang hergestellt werden.

5. Verfahren nach einem der Ansprüche 1 bis 4, dadurch gekennzeichnet, daß für die beiden Teile (11,12) der Kassette (K) unterschiedliche Materialien verwendet werden.

6. Verfahren nach einem der Ansprüche 1 bis 5, dadurch gekennzeichnet, daß für das als zweites Teil (11) gespritzte Teil der Kassette (K) ein Material mit niedrigerem Schmelzpunkt als für das erste Teil (12) verwendet wird.

## Claims

1. Method for manufacturing a device for the transmission of signals between two terminals, at least one of which terminals can be moved in relation to the other and between which terminals a line which runs in turns, forms a winding body and is accommodated in an essentially circular cassette is arranged and to which terminals lines which lead on are connected at the two terminals, in which the cassette comprises two components, a stator and a rotor which can be rotated about its axis and about the stator, characterized in that both components of the cassette (K) are connected to one another in a captive manner by means of injection-moulding such that one component can be rotated in the other about a common axis.

2. Method according to Claim 1, characterized in that both components of the cassette (K) are manufactured by means of injection-moulding as an annular disc (RI) with a cylindrical tubular element (RO) which protrudes on one side and whose clear width is equal to the clear width of the central opening of the annular disc (RI) and whose axial height corresponds approximately to the height of the cassette (K).

3. Method according to Claim 1 or 2, characterized
- in that initially the first component (12) of the cassette (K) is manufactured with at least one peripheral projection (14) on the inner surface of its tubular element (RO2),
- in that subsequently the second component (11) of the cassette (K) is injection-moulded around the first component (12) in such a way that its tubular element (RO1) lies inside the tubular element (RO2) of the first component (12) separated from it by a narrow air gap and engages around the projection (14) of said first component with a peripheral depression (15) and
- in that finally the winding body of the line (10) is inserted into the annular space (13) between the two components (11, 12) of the cassette (K).

4. Method according to one of Claims 1 to 3, characterized in that both components (11, 12) of the cassette (K) are manufactured in pivotable moulds of the same injection-moulding device in one work cycle.

5. Method according to one of Claims 1 to 4, characterized in that different materials are used for the two components (11, 12) of the cassette (K).

6. Method according to one of Claims 1 to 5, characterized in that for the component of the cassette (K) which is injection-moulded as the second component (11) a material is used which has a lower melting point than the material used for the first component (12).

## Revendications

1. Procédé de fabrication d'un dispositif de transmission de signaux entre deux terminaux, dont au moins un est mobile par rapport à l'autre et entre lesquels est disposée une ligne passant en spires, formant une bobine et logée dans une cassette essentiellement de forme ronde, à laquelle sont raccordées des lignes de prolongement aux deux terminaux, la cassette étant composée de deux pièces, un stator et un rotor tournant autour de l'axe de la cassette et du stator, caractérisé en ce que les deux pièces de la cassette (K) sont raccordées entre elles de façon imperdable par moulage par injection de manière à ce qu'une pièce puisse tourner dans l'autre selon un axe commun.

2. Procédé selon la revendication 1, caractérisé en ce que les deux pièces de la cassette (K) sont fabriquées par moulage par injection sous la forme d'un disque (RI) présentant sur un côté un tube cylindrique (RO) écarté, dont le diamètre intérieur est égal à l'ouverture centrale du disque (RI) et dont la hauteur axiale correspond à peu près à la hauteur de la cassette (K).

3. Procédé selon les revendications 1 ou 2, caractérisé en ce
- que l'on fabrique tout d'abord la première pièce (12) de la cassette (K) avec au moins un épaulement (14) sur la surface intérieure de son tube (RO2),
- que la seconde pièce (11) de la cassette (K) est ensuite moulée par injection autour de la première pièce (12) de façon à ce que son tube (RO1) soit séparé par une étroite fente d'aération du tube (RO2) de la première pièce (12), se trouve à l'intérieur de celui-ci, et s'engrène dans l'épaulement (14) de celui-ci par une cavité circulaire (15) et,
- que la bobine de la ligne (10) est enfin introduite dans l'espace annulaire (13) entre les deux pièces (11, 12) de la cassette (K).

4. Procédé selon l'une des revendications 1 à 3, caractérisé en ce que les deux pièces (11, 12) de la cassette (K) sont fabriquées dans des moules pivotants du même dispositif de moulage par injection, en une opération.

5. Procédé selon l'une des revendications 1 à 4, caractérisé en ce que des matériaux différents sont utilisés pour les deux pièces (11, 12) de la cassette (K).

6. Procédé selon l'une des revendications 1 à 5, caractérisé en ce que l'on utilise pour la pièce de la cassette (K) moulée à titre de seconde pièce (11) un matériau présentant un point de fusion plus bas que celui du matériau de la première pièce (12).
